(19) Europäisches Patentamt
European Patent Office
Office européen des brevets

(11) Veröffentlichungsnummer: **0 039 912 B1**

(12) # EUROPÄISCHE PATENTSCHRIFT

(45) Veröffentlichungstag der Patentschrift: **26.01.83**

(51) Int. Cl.³: **C 09 B 67/14**, C 09 B 5/62, C 09 D 17/00, C 08 K 5/00

(21) Anmeldenummer: **81103484.2**

(22) Anmeldetag: **07.05.81**

(54) **Verfahren zur Herstellung von Pigmenten der Perylen-3,4,9,10-tetracarbonsäurediimidreihe und ihre Verwendung.**

(30) Priorität: **10.05.80 DE 3018006**

(43) Veröffentlichungstag der Anmeldung: **18.11.81 Patentblatt 81/46**

(45) Bekanntmachung des Hinweises auf die Patenterteilung: **26.01.83 Patentblatt 83/04**

(84) Benannte Vertragsstaaten: **CH DE FR GB LI**

(56) Entgegenhaltungen:
**DE A 2 360 792**
**DE B 1 142 339**
**DE B 1 272 270**
**FR A 2 211 512**
**FR A 2 224 530**

(73) Patentinhaber: **HOECHST AKTIENGESELLSCHAFT**
**Postfach 80 03 20**
**D-6230 Frankfurt/Main 80 (DE)**

(72) Erfinder: **Spietschka, Ernst, Dr.**
**Kirchweg 3**
**D-6270 Idstein/Taunus (DE)**
Erfinder: **Urban, Manfred**
**Steigerwaldstrasse 2a**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von Pigmenten der Perylen-3,4,9,10-tetracarbonsäurediimidreihe und ihre Verwendung

Aus der DE-OS 23 60 792, ist ein Verfahren zu Herstellung von hochreinen Pigmenten bekannt, wobei man die Rohpigmente mit Schwefelsäure in die Sulfate überführt, diese isoliert, daraus durch Hydrolyse das Reinprodukt freisetzt, abtrennt und in einem flüssigen Medium mahlt. Als Pigmente kommen hierbei auch Perylentetracarbonsäurediimide, auch kurz als « Perylimide » bezeichnet, in Betracht. Weiterhin ist die Möglichkeit erwähnt, bei Verwendung von organischen Flüssigkeiten als Mahlmedium das dem Filterkuchen anhaftende Wasser vor Mahlbeginn zu verdrängen und die Feinverteilung im wasserfreien Medium durchzuführen. Die Mahlung kann gegebenenfalls unter Zusatz von Stoffen durchgeführt werden, welche die Eigenschaften des gemahlenen Pigments selbst verbessern und daher nicht entfernt zu werden brauchen, beispielsweise kationenaktive, anionenaktive oder neutrale grenzflächenaktive Substanzen. In besonderen Fällen kann die bei der Mahlung erhaltene Pigmentpaste durch Erhitzen mit Wasser und/oder mit Wasser mischbaren oder nichtmischbaren Flüssigkeiten nachbehandelt werden.

Die Naßmahlung von Perylen-3,4,9,10-tetracarbonsäurediimid. das über das Sulfat gereinigt wurde, ist auch in der DE-OS 16 19 531 beschrieben.

Aus der DE-OS 23 16 536 ist es bekannt, Perylen-3,4,9,10-tetracarbonsäurediimide und deren N-Alkylderivate, die 1 bis 4 C-Atome je Alkyl aufweisen, in Pigmentform durch Vermahlen des trockenen Rohpigments herzustellen, wobei man das Rohpigment in Gegenwart oder Abwesenheit von Mahlhilfsmitteln mahlt, bis die mittlere Primärteilchengröße kleiner oder gleich 0,05 µm ist, und dann das Mahlgut mit Aminen, niedermolekularen wasserlöslichen aliphatischen Carbonsäureamiden, mit Gemischen davon oder mit 75- bis 84-gewichtsprozentiger Schwefelsäure behandelt und dann das Produkt auf an sich bekannte Weise von dem Behandlungsmedium abtrennt.

Hierbei wird durch Mahlung eine möglichst weitgehende Zerkleinerung des Primärkorns bis zum Abflachen der Röntgenbanden angestrebt, wobei jedoch nichts über das Primärkorn des Rohpigments ausgesagt wird.

Gegenstand der Erfindung ist ein Verfahren zur Herstellung von Pigmenten der allgemeinen Formel

(Siehe das Schema Kolonne 2)

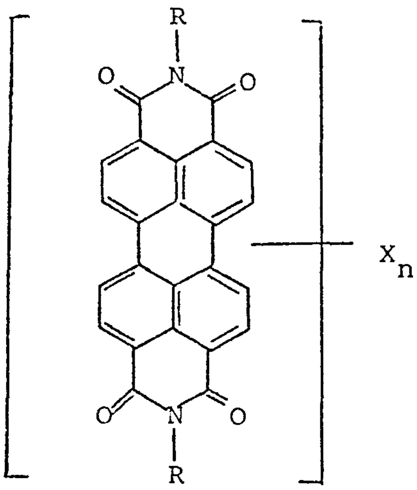

in der R Wasserstoff oder Alkyl mit 1 bis 4 C-Atomen ist, X Chlor und/oder Brom ist und n eine Zahl von 0 bis 4 bedeutet, durch Überführen des entsprechenden Rohpigments in das Sulfat, Isolieren des Sulfats, Freisetzen des Reinprodukts aus dem Sulfat durch Hydrolyse, Abtrennung und Mahlung des wasserfreien Reinprodukts, gegebenenfalls mit Zuschlagstoffen und gegebenenfalls mit anschließendem Lösemittelfinish, das dadurch gekennzeichnet ist, daß das Reinprodukt trocken vermahlen wird.

Die erfindungsgemäß erhaltenen Pigmente zeichnen sich durch höchste Transparenz und Farbstärke, Reinheit des Farbtons und einwandfreies rheologisches Verhalten aus und sind deshalb für Lacke, insbesondere für Metallic-Lackierungen, von Bedeutung. Darüberhinaus eignen sie sich hervorragend zum Färben von plastischen Massen, beispielsweise zur Spinnfärbung organischer Fasermaterialien. Gegenstand der Erfindung ist deshalb auch die Verwendung der erfindungsgemäß erhaltenen Pigmente zu Färben von Lacken und plastischen Massen.

Als Ausgangsmaterial dienen Rohpigmente, die bei den üblichen Synthesen, beispielsweise durch Alkalischmelze von Naphthalimiden oder Alkylierung von Perylimid, anfallen.

Bei der Reinigung gemäß DE-OS 23 60 792 wird zunächst ein hochkristallines, reines Sulfat isoliert, aus dem bei der Hydrolyse ein « Präpigment » mit sehr kleinem Primärkorn erhalten wird. Wie das Röntgenspektrum (mit Cu $K_\alpha$-Strahlung) zeigt, haben die der Mahlung unterworfenen Reinprodukte eine sehr hohe Kristallinität und teilweise starke Textur, bedingt durch sehr gute Kristallinität, aber schon sehr kleine Primärteilchen. Im Gegensatz dazu weisen die gemäß DE-OS 23 16 536 eingesetzten Rohpigmente im Röntgenspektrum nur mäßige Kristallqualität auf. Demzufolge hat im erfindungsgemäßen Verfahren die Mahlung nicht die Aufgabe einer Primärkornzerkleinerung bis zum

amorphen Bereich, sondern im wesentlichen die bei der Hydrolyse im Agglomerat vorliegenden Primärteilchen möglichst weitgehend freizulegen.

Zur Erreichung dieses Ziels ist es von Vorteil, aber nicht in jedem Falle erforderlich, bei der Mahlung Zuschlagstoffe (Mahlhilfsmittel) zuzusetzen, die die Reagglomeration während der Mahlung möglichst gering halten. Besonders vorteilhaft ist es, Mahlhilfsmittel zu verwenden, die nach der Aufarbeitung im Pigment verbleiben können, beispielsweise oberflächenaktive Stoffe. Besonders bewährt haben sich Salze von Fettsäuren sowie Harze und ihre Salze, die gegebenenfalls nach der Mahlung in die freien Säuren überführt werden können.

Es ist auch möglich, bei der Mahlung die üblichen anorganischen Salze zuzusetzen, beispielsweise Natriumchlorid oder Natriumsulfat.

Im Anschluß an die durch die Mahlung mehr oder weniger weitgehend erreichte Desagglomerierung kann je nach Einsatzzweck zur Erreichung hoher Pigmentqualitäten ein Lösemittelfinish angeschlossen werden. Hierfür eignen sich die für diesen Zweck üblichen Finishmedia, insbesondere polare Lösemittel wie wäßrige Schwefelsäure, vor allem jedoch polare organische Lösemittel wie Dioxan, Chlorbenzol, Nitrobenzol, Morpholin, Pyridin, Chinolin, Tetramethylensulfon (Sulfolan), Dimethylsulfoxid, N-Methylacetamid, Dimethylformamid oder N-Methylpyrrolidon.

Die so erhaltenen Pigmente lassen sich sehr leicht in den Anwendungsmedien verteilen und ergeben Pigmentierungen von außerordentlich hoher Transparenz und Farbstärke, Reinheit des Farbtons und hoher Licht- und Wetterechtheit. Diese Kombination von Eigenschaften, insbesondere die hohe Transparenz der Färbungen, war mit den bekannten Perylimidpigmenten nicht zu erzielen.

In den folgenden Beispielen wird die Erfindung näher erläutert. Prozentangaben beziehen sich hierbei auf das Gewicht. Der Ausdruck « Perylimid » bezeichnet das — gegebenenfalls wie angegeben substituierte — Perylen-3,4,9,10-tetracarbonsäurediimid.

Beispiel 1

a) Herstellung des Rein-Perylimids

50 g Rohperylimid werden bei Raumtemperatur in 1 000 g konz. Schwefelsäure eingetragen und durch Erwärmen auf 60 °C gelöst. In die Lösung werden im Laufe einer Stunde 375 g 50 %ige Schwefelsäure zugetropft, wobei man darauf achtet, daß die Temperatur nicht über 100 °C ansteigt. Man läßt die erhaltene Kristallsuspension auf Raumtemperatur abkühlen, saugt das kristalline Sulfat ab und wäscht es portionsweise mit insgesamt 350 g 82,7 %iger Schwefelsäure. Hierauf wird der Filterrückstand mit Wasser gewaschen, bis das Filtrat neutral reagiert, und getrocknet. Es werden 44 g Reinperylimid erhalten.

b) Mahlung

24 g Reinperylimid werden mit 6 g eines alkohollöslichen Fumarsäure-Kolophoniumharzes (D 1,15, Säurezahl 110 bis 130, Farbzahl 30) und 1 575 g « Cylpebs » (aus Korund, 12 mm Durchmesser, Hersteller : Groh GmbH, Hof) als Mahlkörper in einer 1 Liter-Schwingmühle (Typ « Vibratom », Hersteller Siebtechnik Mühlheim), deren Mahleinsatz aus Polypropylen besteht, 12 Stunden vermahlen und anschließend von den Mahlkörpern abgesiebt.

c) Lösemittelfinish

In einem Rührgefäß werden 250 g N-Methylpyrrolidon vorgelegt, unter Rühren 25 g Mahlgut eingetragen und 15 Stunden bei Raumtemperatur nachgerührt. Nach Zugabe von 200 ml Wasser wird die Mischung auf 50 °C erwärmt, 2 Stunden bei dieser Temperatur gerührt und das Pigment abgesaugt. Der Filterrückstand wird frei von N-Methylpyrrolidon gewaschen und bei 80 °C getrocknet. Es werden 24,5 g Pigment erhalten, das sich hervorragend zum Färben von Lakken und plastischen Massen eignet, wobei Marron-Töne erhalten werden.

Ein ähnliches Ergebnis erhält man, wenn anstelle von N-Methylpyrrolidon N-Methylacetamid, Dioxan, Pyridin, Morpholin oder 80 %ige Schwefelsäure verwendet werden.

Beispiel 2

24 g des gemäß Beispiel 1a) erhaltenen Reinperylimids werden gemäß Beispiel 1b) vermahlen, wobei jedoch anstelle des dort genannten Harzes 6 g Natriumlaurat (mit 50 % Kochsalzgehalt) eingesetzt werden.

In einem Rührgefäß werden 125 g Dimethylformamid vorgelegt, 25 g des so erhaltenen Mahlguts eingetragen und 15 Stunden bei Raumtemperatur nachgerüht. Nach Zugabe von 125 ml Wasser wird die Mischung auf 50 °C erwärmt und 2 Stunden bei dieser Temperatur nachgerührt. Anschließend werden 20 g 18 %ige Salzsäure zugetropft, die Mischung 1 Stunde bei 50 °C nachgerührt, das Pigment abgesaugt, neutral gewaschen und bei 80 °C getrocknet. Man erhält 24 g Pigment, das sich hervorragend zum Färben von Lacken und plastischen Massen eignet, wobei Marron-Töne erhalten werden.

Beispiel 3

a) Herstellung des Reinperylimids

Analog Beispiel 1a) werden 50 g Rohperylimid eingesetzt, jedoch in nur 250 g konz. Schwefelsäure bei Raumtemperatur eingetragen. Die Mischung wird auf 80 °C erwärmt, 1 Stunde bei dieser Temperatur gerührt und ebenfalls bei dieser Temperatur im Laufe 1 Stunde 93,8 g 50 %ige Schwefelsäure zugetropft. Das weitere Verfahren verläuft wie in Beispiel 1a) angegeben. Es werden 43,4 g Reinperylimid erhalten.

b) Mahlung
Analog Beispiel 1b) werden 24 g des so erhaltenen Reinperylimids vermahlen, jedoch anstelle des dort genannten Harzes 6 g Natriumstearat (mit 60 % Kochsalzgehalt) eingesetzt.

c) Lösemittelfinish
In einem Rührgefäß werden 125 g N-Methylpyrrolidon vorgelegt, unter Rühren 25 g Mahlgut eingetragen und 15 Stunden bei Raumtemperatur nachgerührt. Anschließend erhitzt man die Mischung 2 Stunden auf 125 °C, läßt auf 50 °C abkühlen, gibt bei dieser Temperatur 200 ml Methanol zu und tropft 20 g 18 %ige Salzsäure ein. Man rührt 1 Stunde bei 50 °C nach, saugt das Pigment ab und wäscht es mit Methanol. Man erhält 22,8 g Pigment, das sich hervorragend zum Färben von Lacken und plastischen Massen eignet, wobei Marron-Töne erhalten werden.

Beispiel 4

In einem Rührgefäß werden 125 g Nitrobenzol vorgelegt, 25 g des nach Beispiel 2 erhaltenen Mahlguts eingetragen und 2 Stunden bei 50 °C gerührt. Nach Zugabe von 125 g Methanol wird weitere 2 Stunden bei 50 °C gerührt, 20 g 18 %ige Salzsäure zugetropft und 1 Stunde bei 50 °C nachgerührt. Man saugt das Pigment ab, wäscht es mit Methanol und trocknet. Es werden 24 g Pigment erhalten, das sich hervorragend zum Färben von Lacken und plastischen Massen eignet, wobei Marron-Töne erhalten werden.

Vergleichbare Ergebnisse erhält man, wenn man anstelle von Nitrobenzol Chlorbenzol, Chinolin, Tetramethylensulfon oder Dimethylsulfoxid verwendet.

Beispiel 5

a) Herstellung des Reinpigments
40 g des nach Beispiel 1a) erhaltenen Reinperylimids werden bei Raumtemperatur in 1 200 g 100 %ige Schwefelsäure eingetragen, 5 g Jod zugegeben, die Mischung auf 80 bis 90 °C erwärmt und bei dieser Temperatur im Laufe von 6 Stunden 14 g Chlor eingeleitet. Man läßt auf Raumtemperatur abkühlen, tropft 450 g 50 %ige Schwefelsäure dazu, saugt das ausgefallene Sulfat ab und wäscht es mit 350 g 78 %iger Schwefelsäure. Der Filterrückstand wird dann mit Wasser gewaschen, bis das Filtrat neutral reagiert. Man erhält so 35,3 g Reinperylimid mit einem Chlorgehalt von 4,25 %.

b) Mahlung
Das so erhaltene chlorhaltige Reinperylimid wird nach Beispiel 2b) vermahlen.

c) Lösemittelfinish
In einem Rührgefäß werden 250 g N-Methylpyrrolidon vorgelegt, unter Rühren 25 g Mahlgut eingetragen und 15 Stunden bei Raumtemperatur nachgerührt. Nach Zugabe von 200 ml Wasser wird 2 Stunden bei 50 °C gerührt, dann werden 20 g 18 %ige Salzsäure zugetropft und eine Stunde bei 50 °C nachgerührt. Nach Absaugen wird das Pigment neutral gewaschen und bei 80 °C getrocknet. Man erhält 21,9 g Pigment, das etwas dunkler und transparenter ist, als das nach Beispiel 1 erhaltene Pigment und das sich hervorragend zum Färben von Lacken und plastischen Massen eignet.

Beispiel 6

40 g des nach Beispiel 1a) erhaltenen Reinperylimids werden bei Raumtemperatur in 1 200 g 100 %ige Schwefelsäure eingetragen und 5 g Jod zugegeben. Die Mischung wird auf 80 bis 90 °C erwärmt und bei dieser Temperatur werden im Laufe von 5 Stunden 42 g Chlor eingeleitet. Man läßt auf Raumtemperatur abkühlen, tropft 800 g 50 %ige Schwefelsäure zu, saugt das ausgefallene Sulfat ab und wäscht es mit 350 g 78 %iger Schwefelsäure. Durch Waschen des Rückstands mit Wasser (bis das Filtrat neutral reagiert) erhält man 50,3 g Reinperylimid mit einem Chlorgehalt von 23,5 %.

24 g dieses Reinperylimids werden wie in Beispiel 2b) angegeben gemahlen und gemäß Beispiel 5c) nachbehandelt. Man erhält 23,6 g eines Pigments, das Lacke und plastische Massen in rotem Farbton anfärbt.

Beispiel 7

50 g eines nach Beispiel 1a) erhaltenen Reinperylimids werden bei Raumtemperatur in 900 g 100 %ige Schwefelsäure eingetragen, 13,5 g Brom zugegeben und die Mischung 7 Stunden bei 55 °C gerührt. Nach Abkühlen auf Raumtemperatur tropft man 495 g 50 %ige Schwefelsäure zu, saugt das ausgefallene Sulfat ab und wäscht es mit 180 g 78 %iger Schwefelsäure. Der Rückstand wird mit Wasser gewaschen, bis das Filtrat neutral reagiert, wodurch man 29 g Reinperylimid mit einem Bromgehalt von 1,15 % erhält.

24 g dieses Reinperylimids werden wie in Beispiel 2b) angegeben gemahlen und gemäß Beispiel 5c) nachbehandelt. Man erhält 23,6 g eines Pigments, das etwas gelblicher ist als das Produkt nach Beispiel 1 und das sich hervorragend zum Färben von Lacken und plastischen Massen eignet.

Beispiel 8

50 g eines nach Beispiel 1a) erhaltenen Reinperylimids werden bei Raumtemperatur in 1 500 g 100 %iger Schwefelsäure eingetragen, 0,5 g Jod und 20,5 g Brom zugegeben und die Mischung 6 Stunden auf 100 °C erhitzt. Nach Abkühlen auf 80 °C werden 1 000 g 50 %ige Schwefelsäure zugetropft, nach Abkühlen auf Raumtemperatur das ausgefallene Sulfat abgesaugt, zunächst mit 250 g 78 %ige Schwefelsäure und anschließend mit Wasser gewaschen, bis das Filtrat neutral reagiert. Man erhält so 56,7 g Reinperylimid mit

einem Bromgehalt von 21,4 %.

Das so erhaltene Reinperylimid wird gemäß Beispiel 2b) gemahlen und gemäß Beispiel 5c) nachbehandelt. Man erhält 23,6 g eines Pigments, das Lacke und plastische Massen in rotem Farbton anfärbt.

Beispiel 9

50 g Reinperylimid, erhalten nach Beispiel 1a), werden bei Raumtemperatur in 1 500 g 100 %iger Schwefelsäure eingetragen, 1 g Jod und 30 g Brom zugegeben und die Mischung 6 Stunden bei 125 °C gerührt. Nach Abkühlen auf 100 °C werden 1 000 g 50 %ige Schwefelsäure zugetropft, nach Abkühlen auf Raumtemperatur das ausgefallene Sulfat abgesaugt, zunächst mit 300 g 78 %iger Schwefelsäure und anschließend mit Wasser gewaschen, bis das Filtrat neutral reagiert. Man erhält so 66,4 g Reinperylimid mit einem Bromgehalt von 28,6 %.

Das so erhaltene Reinperyimid wird gemäß Beispiel 2b) gemahlen und nach Beispiel 5c) nachbehandelt. Man erhält so 23,5 g eines Pigments, das Lacke und plastische Massen in rotem Farbton anfärbt.

Beispiel 10

30 g des 21,4 % Brom enthaltenden Reinperylimids (erhalten nach Beispiel 8) werden bei Raumtemperatur in 900 g 100 %ige Schwefelsäure eingetragen und gelöst. Nach Zugabe von 1 g Jod werden bei 80 bis 90 °C im Laufe von 6 Stunden 7 g Chlor eingeleitet und anschließend im selben Temperaturbereich 600 g 50 %ige Schwefelsäure zugetropft. Nach Abkühlen auf Raumtemperatur wird das ausgefallene Sulfat abgesaugt, zunächst mit 350 g 78 %iger Schwefelsäure und anschließend mit Wasser gewaschen, bis das Filtrat neutral reagiert. Man erhält 29,7 g eines Reinperylimids mit einem Bromgehalt von 19,9 % und einem Chlorgehalt von 5,05 %.

Das so erhaltene Reinperylimid wird gemäß Beispiel 2b) gemahlen und gemäß Beispiel 5c) nachbehandelt. Man erhält 23,7 g eines Pigments, das Lacke und plastische Massen in rotem Farbton anfärbt.

Beispiel 11

a) Herstellung des Reinpigments

50 g Roh-Dimethylperylimid (hergestellt nach DE-OS 27 26 682) werden bei Raumtemperatur in 2 000 g konz. Schwefelsäure eingetragen und durch Erwärmen auf 60 °C gelöst. Anschließend werden im Laufe einer Stunde 375 g 50 %ige Schwefelsäure zugetropft, wobei darauf geachtet wird, daß die Temperatur nicht über 100 °C ansteigt. Nach Abkühlen auf Raumtemperatur wird das ausgefallene Sulfat abgesaugt, zunächst mit 350 g 82,7 %iger Schwefelsäure und anschließend mit Wasser gewaschen, bis das Filtrat neutral reagiert. Nach Trocknen werden 43 g Reindimethylperylimid erhalten.

b) Mahlung

10 g des so erhaltenen Reindimethylperylimids werden mit 1 g Ölsäuremonoethanolamid, 100 g Natriumsulfat und 3 720 g Stahlkugeln (8 mm Durchmesser) als Mahlkörper in der in Beispiel 1 beschriebenen Schwingmühle 6 Stunden vermahlen und danach das Mahlgut von den Mahlkörpern abgesiebt. Zur Abtrennung des Natriumsulfats wird das Mahlgut in ein Rührgefäß eingetragen, das 1 Liter Wasser enthält, eine Stunde gerührt, das Pigment abgesaugt und sulfatfrei gewaschen. Es werden 10,1 g eines Pigments erhalten, das sich hervorragend zum Färben von Lacken, insbesondere lufttrocknenden Lacken und plastischen Massen eignet.

Beispiel 12

37 g Roh-Dimethylperylimid mit einem Chlorgehalt von 3,65 % (hergestellt nach DE-PS 441 587) werden bei Raumtemperatur in 1 110 g konz. Schwefelsäure eingetragen und gelöst. Bei Raumtemperatur werden 1 110 g 50 %ige Schwefelsäure zugetropft und das ausgefallene Sulfat bei Raumtemperatur abgesaugt. Das Sulfat wird zunächst mit 350 g 78 %iger Schwefelsäure und anschließend mit Wasser gewaschen, bis das Filtrat neutral reagiert, und getrocknet. Man erhält 35 g Rein-Dimethylperylimid mit einem Chlorgehalt von 3,65 %.

Das so erhaltene Rein-Dimethylperylimid wird gemäß Beispiel 2b) gemahlen und gemäß Beispiel 2c) nachbehandelt, wobei jedoch anstelle des Dimethylformamids N-Methylpyrrolidon eingesetzt wird. Man erhält so 24 g eines Pigments, das Lacke und plastische Massen in rotem Farbton anfärbt.

**Ansprüche**

1. Verfahren zur Herstellung von Perylen-3,4,9,10-tetracarbonsäurediimid-Pigmenten der allgemeine Formel

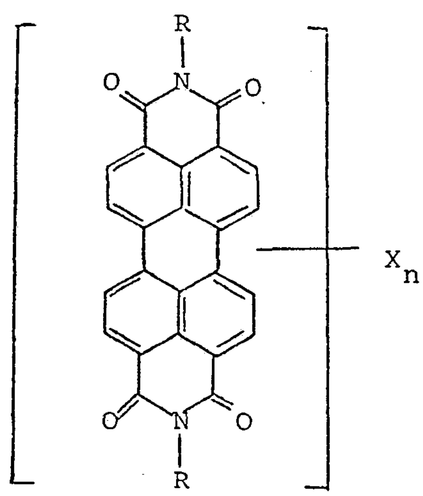

in der R Wasserstoff oder Alkyl mit 1 bis 4 C-Atomen ist, X Chlor und/oder Brom ist und n eine

Zahl von 0 bis 4 bedeutet, durch Überführen des entsprechenden Rohpigments in das Sulfat, Isolieren des Sulfats, Freisetzen des Reinprodukts aus dem Sulfat durch Hydrolyse, Abtrennung und Mahlung des wasserfreien Reinprodukts, gegebenenfalls mit Zuschlagstoffen und gegebenenfalls mit anschließendem Lösemittelfinish, dadurch gekennzeichnet, daß das Reinprodukt trocken vermahlen wird.

2. Verfahren nach Anspruch 1, dadurch gekennzeichnet, daß als Zuschlagstoff ein Mahlhilfsmittel eingesetzt wird, das nach der Aufarbeitung im Pigment verbleiben kann.

3. Verfahren nach Anspruch 1 und 2, dadurch gekennzeichnet, daß als Zuschlagstoff ein oberflächenaktiver Stoff eingesetzt wird.

4. Verfahren nach Anspruch 1 bis 3, dadurch gekennzeichnet, daß als Zuschlagstoff das Salz einer Fettsäure, ein Harz oder ein Harzsals eingesetzt wird.

5. Verfahren nach Anspruch 1, dadurch gekennzeichnet, daß der Lösemittelfinish mit einem polaren Lösemittel durchgeführt wird.

6. Verfahren nach Anspruch 1 und 5, dadurch gekennzeichnet, daß der Lösemittelfinish mit einem polaren organischen Lösemittel durchgeführt wird.

7. Verfahren nach Anspruch 1, 5 und 6, dadurch gekennzeichnet, daß der Lösemittelfinish mit N-Methylpyrrolidon, Dimethylformamid oder Nitrobenzol durchgeführt wird.

8. Verwendung der nach Anspruch 1 bis 7 erhaltenen Pigmente zum Färben von Lacken und plastischen Massen.

9. Verwendung der nach Anspruch 1 bis 7 erhaltenen Pigmente zum Pigmentieren von Metallic-Lacken.

**Claims**

1. Process for the preparation of perylene-3,4,9,10-tetracarboxylic acid diimide pigments of the general formula

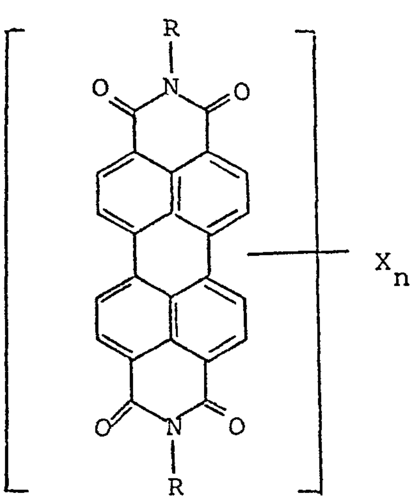

in which R is hydrogen or alkyl having 1 to 4 C atoms, X is chlorine and/or bromine and n is a number from 0 to 4, by converting the corresponding crude pigment to the sulfate, isolating the sulfate, liberating the pure product from the sulfate by hydrolysis, separating off and milling the anhydrous pure product optionally with additives and optionally with a subsequent solvent finish, characterized by milling the pure product dry.

2. Process as claimed in claim 1, wherein the additive employed is a milling assistant which after working up can remain in the pigment.

3. Process as claimed in claims 1 and 2, wherein the additive employed is a surface-active substance.

4. Process as claimed in claims 1 to 3, wherein the additive employed is a fatty acid salt, a resin or a resin salt.

5. Process as claimed in claim 1, wherein the solvent finish is carried out with a polar solvent.

6. Process as claimed in claims 1 and 5, wherein the solvent finish is carried out with a polar organic solvent.

7. Process as claimed in claims 1, 5 and 6, wherein the solvent finish is carried out with N-methylpyrrolidone, dimethylformamide or nitrobenzene.

8. Use of the pigments obtained according to claims 1 to 7 for coloring paints and plastic compositions.

9. Use of the pigments obtained according to claims 1 to 7 for pigmenting metallic paints.

**Revendications**

1. Procédé de préparation de pigments de la série des diimides de l'acide pérylène-3,4,9,10-tétracarboxylique de formule générale

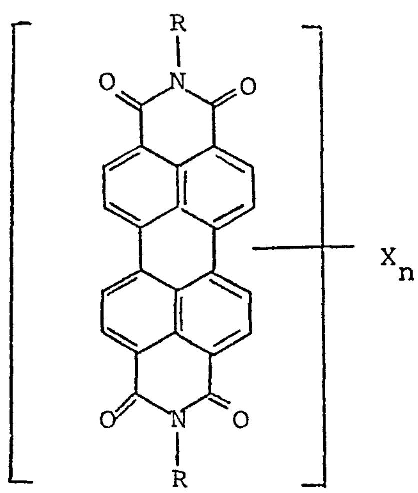

(le symbole R désignant l'hydrogène ou un alkyle en $C_1$ à $C_4$, X le chlore et /ou le brome et n un nombre de 0 à 4) par transformation du pigment brut correspondant en sulfate, isolement de celui-ci, libération du produit pur à partir du sulfate par hydrolyse, séparation et enfin broyage du produit pur anhydre, éventuellement avec des additifs, qui est le cas échéant suivi d'une finition avec un

solvant, procédé caractérisé en ce que le produit pur est broyé à sec.

2. Procédé selon la revendication 1, caractérisé en ce que l'on utilise comme additif un adjuvant de broyage pouvant demeurer dans le pigment après traitement de celui-ci.

3. Procédé selon la revendication 1 ou 2, caractérisé en ce que l'on utilise comme additif une substance tensio-active (surfactif).

4. Procédé selon l'une quelconque des revendications 1 à 3, caractérisé en ce que l'on utilise comme additif le sel d'un acide gras ou bien une résine ou un sel de résine.

5. Procédé selon l'une quelconque des revendications précédentes, caractérisé en ce que la finition au solvant est effectuée avec un solvant polaire.

6. Procédé selon l'une quelconque des revendications précédentes, caractérisé en ce que la finition au solvant est effectuée avec un solvant organique polaire.

7. Procédé selon la revendication 6, caractérisé en ce que la finition au solvant est effectuée avec la N-méthylpyrrolidone, le diméthylformamide ou le nitro-benzène.

8. L'utilisation des pigments obtenus selon l'une quelconque des revendications 1 à 7 pour colorer ou teindre des vernis ou matières plastiques.

9. L'utilisation des pigments obtenus selon l'une quelconque des revendications 1 à 7 pour pigmenter des laques métallisées.